# EUROPEAN PATENT APPLICATION

(11) **EP 2 239 245 A1**
(43) Date of publication of application: **13.10.2010**
(21) Application number: 09704332.7
(22) Date of filing: 20.01.2009
(51) Int. Cl.: C04B 35/46, C04B 35/10, C04B 35/44

(54) **ALUMINUM MAGNESIUM TITANATE - ALUMINA COMPOSITE CERAMIC**

(30) Priority: 21.01.2008 JP 2008010159
(71) Applicant: Sumitomo Chemical Company, Limited, Tokyo 104-8260 (JP)
(72) Inventor: TOHMA, Tetsuro, Niihama-shi Ehime 792-0002 (JP); IWATO, Satoko, Tokyo 150-0001 (JP); Yamanaka,Rina, Nagoya-shi Aichi (JP)
(74) Representative: Vossius & Partner
(86) International application number: PCT/JP2009/050726
(87) International publication number: WO 2009/093560

(57) **Abstract**

An object of the invention is to provide a ceramic having a small thermal expansion coefficient and having more excellent mechanical strength. The invention is an aluminium magnesium titanate-alumina composite ceramic containing aluminium magnesium titanate and alumina and, the elemental composition ratio of A1, Mg and Ti therein is represented by a compositional formula (1):

Al₂₍₁₋ₓ₎MgₓTi₍₁₊ₓ₎O₅ + aAl₂O₃ (1),

wherein coefficient x satisfies 0 < x≤ 1, and coefficient a satisfies 0.4x ≤ a < 2x.

## Description

### TECHNICAL FIELD

The present invention relates to aluminium magnesium titanate-alumina composite ceramics, and precisely to ceramics containing aluminium magnesium titanate and alumina.

### BACKGROUND ART

Aluminium magnesium titanate is a ceramic containing A1, Mg and Ti as the constitutive elements, and is used as a ceramic having a small coefficient of thermal expansion; and Patent Document 1 (WO2004/039747) discloses aluminium magnesium titanate having excellent mechanical strength and having an elemental composition ratio of A1, Mg and Ti represented by a formula (1'):

Al₂₍₁₋ₓ₎MgₓTi₍₁₊ₓ₎O₅ (1')

wherein coefficient x satisfies 0.1≤ x < 1.

Such ceramics are desired to have a small coefficient of thermal expansion and additionally have more excellent mechanical strength.

### DISCLOSURE OF THE INVENTION

### PROBLEMS THAT THE INVENTION IS TO SOLVE

The present inventors have diligently studied so as to develop a ceramic having a small coefficient of thermal expansion and having more excellent mechanical strength and, as a result, have completed the invention.

### MEANS FOR SOLVING THE PROBLEMS

Specifically, the invention provides an aluminium magnesium titanate-alumina composite ceramic containing aluminium magnesium titanate and alumina and, the elemental composition ratio of Al, Mg and Ti therein is represented by a compositional formula (1):

Al₂₍₁₋ₓ₎MgₓTi₍₁₊ₓ₎O₅ + aAl₂O₃ (1),

wherein coefficient x satisfies 0< x ≤ 1, and coefficient a satisfies 0.4x ≤ a < 2x.

### EFFECT OF THE INVENTION

A coefficient of thermal expansion of the aluminium magnesium titanate-alumina composite ceramic of the invention is as small as that of conventional aluminium magnesium titanate, and the aluminium magnesium titanate-alumina composite ceramic has more excellent mechanical strength.

### MODE FOR CARRYING OUT THE INVENTION

### [Composition]

The aluminium magnesium titanate-alumina composite ceramic of the invention contains aluminium magnesium titanate and alumina.

Aluminium magnesium titanate is a solid solution of aluminium titanate [Al₂TiO₅] and magnesium titanate [MgTi₂O₅].

The elemental composition ratio of the composite ceramic of the invention is represented by the above-mentioned compositional formula (1), and coefficient x satisfies 0 < x ≤ 1, generally 0.05 ≤ x ≤ 1. When coefficient x is 0, the ceramic may readily decompose at high temperature. When coefficient a is less than 0.4x, the mechanical strength of the ceramic may be insufficient; and when coefficient a is more than 2x, the coefficient of thermal expansion thereof may be large. Preferably, coefficient a satisfies 0.4x ≤ a ≤ 1.8x, more preferably 0.4x ≤ a≤ 1.5x.

The aluminium magnesium titanate-alumina composite ceramic of the invention may contain element Si, and in this case the elemental composition ratio of Al, Mg, Ti and Si therein is preferably represented by a compositional formula (2) :

Al₂₍₁₋ₓ₎MgₓTi₍₁₊ₓ₎O₅ + aAl₂O₃ + bSiO₂ (2),

wherein coefficient x satisfies 0 < x ≤ 1, coefficient a satisfies 0.4x ≤ a < 2x, and coefficient b satisfies 0.05 ≤ b ≤ 0.4.

In case where the composite ceramic of the invention contains element Si, preferably the ceramic does not substantially contain crystalline SiO₂, concretely, the powder X-ray diffraction spectrum of the ceramic does not give a peak of crystalline SiO₂, from the viewpoint that the ceramic is stable and hardly decomposes at high temperature.

In case where the composite ceramic of the invention contains element Si, the ceramic may contain element Na, K or Ca; and in this case the elemental composition ratio of Al, Mg, Ti, Si, Na, K and Ca therein is preferably represented by a compositional formula (3):

Al₂₍₁₋ₓ₎MgₓTi₍₁₊ₓ₎O₅ + aAl₂O₃ + bSiO₂ + cNa₂O + dK₂O + eCaO (3),

wherein coefficient x satisfies 0 < x ≤ 1, coefficient a satisfies 0.4x ≤ a < 2x, coefficient b satisfies 0.05 ≤ b ≤ 0.4, and coefficient c, d and e satisfy b/20 ≤c + d+e ≤ b/6.
When (c+d+e) is less than b/20, crystalline SiO₂ is liable to generate. When (c+d+e) is not more than b/6, the ceramic has the advantage of mechanical strength. More preferably, the coefficient c, d, and e satisfy 0<c, 0<d and 0<e, and the ceramic contains element Na, K and Ca; even more preferably, the coefficients satisfy 0<e<c and 0<e<d, and the ceramic contains much more element Na and K than Ca; still more preferably, coefficient e satisfies e≤0.004. These preferred embodiment has the advantage of mechanical strength, coefficient of thermal expansion of the ceramic, and additionally high-temperature stability, therefore the aluminium magnesium titanate hardly decomposes into Al₂O₃, MgO, TiO₂, etc even in continuous use at high temperature.

Alumina in the composite ceramic of the invention is generally α-alumina. In general, alumina is contained in the composite ceramic as fine particles, has a particle size of from 0.1 µm (minimum particle size) to 10 µm (maximum particle size), and has a mean particle size of from 0.5 µm to 5 µm.

### [Production Method]

The aluminium magnesium titanate-alumina composite ceramic of the invention can be produced by fairing a mixture containing an alumina source, a magnesia source and a titania source. When the elemental composition ratio of Al, Mg and Ti of the mixture is represented by the compositional formula (1), coefficient x satisfies 0 < x ≤ 1, and coefficient a satisfies 0.4x ≤ a < 2x.

The alumina source in the mixture is a compound to be the aluminium ingredient constituting aluminium magnesium titanate and alumina, and, for example, includes a powder of alumina (aluminium oxide). The crystal type of alumina includes a γ-type, a δ-type, a θ-type, an α-type and others, and may be amorphous. As the alumina, preferred is an α-type alumina.

The alumina source also includes a compound capable of being led into alumina by firing alone in air. The compound includes, for example, aluminium salt, aluminium alkoxide, aluminium hydroxide, metal aluminium, etc.

The aluminium salt may be an inorganic salt with an inorganic acid, or an organic salt with an organic acid. Concretely, the aluminium inorganic salt includes, for example, aluminium nitrate salts such as aluminium nitrate, ammonium aluminium nitrate, etc.; aluminium carbonate salts such as ammonium aluminium carbonate, etc. The aluminium organic salt includes, for example, aluminium oxalate, aluminium acetate, aluminium stearate, aluminium lactate, aluminium laurate, etc.

Concretely, the aluminium alkoxide includes, for example, aluminium isopropoxide, aluminium ethoxide, aluminium sec-butoxide, aluminium tert-butoxide, etc.

The crystal type of aluminium hydroxide includes, for example, a gibbsite type, a bayerite type, a norstrandite type, a boehmite type, a pseudo-boehmite type, etc., and may be amorphous. Amorphous aluminium hydroxide includes, for example, an aluminium hydrolyzate to be obtained by hydrolysis of an aqueous solution of a water-soluble aluminium compound such as aluminium salt, aluminium alkoxide, etc.

The alumina source is preferably alumina.

The magnesia source is a compound to be a magnesium ingredient to constitute aluminium magnesium titanate, and for example, includes a powder of magnesia (magnesium oxide).

The magnesia source also includes a compound capable of being led into magnesia by firing alone in air. The compound includes, for example, magnesium salt, magnesium alkoxide, magnesium hydroxide, magnesium nitride, metal magnesium, etc.

The magnesium salt concretely includes magnesium chloride, magnesium perchlorate, magnesium phosphate, magnesium pyrophosphate, magnesium oxalate, magnesium nitrate, magnesium carbonate, magnesium acetate, magnesium sulfate, magnesium citrate, magnesium lactate, magnesium stearate, magnesium salicylate, magnesium myristate, magnesium gluconate, magnesium dimethacrylate, magnesium benzoate, etc.

The magnesium alkoxide concretely includes magnesium methoxide, magnesium ethoxide, etc.

As the magnesia source, usable is a compound serving both as a magnesia source and an alumina source. The compound includes, for example, magnesia spinel (MgAl₂O₄).

The titania source is a compound to be a titanium ingredient to constitute aluminium magnesium titanate, and for example, includes titanium oxide. Titanium oxide includes, for example, titanium(IV) oxide, titanium(III) oxide, titanium(II) oxide, etc. Preferred is titanium(IV) oxide. The crystal type of titanium(IV) oxide includes an anatase type, a rutile type, a brookite type, etc., and may be amorphous. More preferred are an anatase type and a rutile type.

The titania source includes a powder of a compound to be led to titania (titanium oxide) by firing alone in air. The compound includes, for example, titanium salt, titanium alkoxide, titanium hydroxide, titanium nitride, titanium sulfide, titanium metal, etc.

The titanium salt concretely includes titanium trichloride, titanium tetrachloride, titanium(IV) sulfide, titanium(VI) sulfide, titanium(IV) sulfate, etc. The titanium alkoxide concretely includes titanium(IV) ethoxide, titanium(IV) methoxide, titanium(IV) t-butoxide, titanium(IV) isobutoxide, titanium(IV) n-propoxide, titanium(IV) tetraisopropoxide, and their chelate compounds, etc.

The titania source is preferably titanium oxide.

The alumina source, the magnesia source and the titania source are generally used as powder.

The mixture containing the alumina source, the magnesia source and the titania source may further contains a silica source. Containing a silica source, the mixture may be readily processed into the aluminium magnesium titanate-alumina composite ceramic of the invention having more excellent mechanical strength.

The silica source is a compound to give a silicon ingredient to be in the aluminium magnesium titanate-alumina composite ceramic, and for example, includes silicon oxide (silica) such as silicon dioxide, silicon monoxide, etc.

The silica source also includes a powder of a compound capable of being led into silica by firing alone in air. The compound includes, for example, silicic acid, silicon carbide, silicon nitride, silicon sulfide, silicon tetrachloride, silicon acetate, sodium silicate, sodium orthosilicate, glass frit, etc. Preferred are glass frit and the like, from the viewpoint of industrial availability.

When the elemental composition ratio of Al, Mg, Ti and Si of the mixture is represented by the compositional formula (2), preferably coefficient x satisfies 0 < x ≤ 1, coefficient a satisfies 0.4x ≤ a < 2x, and coefficient b satisfies 0.05 ≤ b ≤ 0.4.

As the silica source, also usable is a compound additionally serving as an alumina source. The compound includes, for example, an aluminosilicate containing at least one element selected from Na, K and Ca and containing Si and Al. When the elemental composition of the compound is represented by a compositional formula (4):

(c₁Na₂O, d₁K₂O,e₁CaO)·yAl₂O₃·zSiO₂ (4),

wherein coefficient c₁, d₁, and e₁ satisfy c₁+d₁+e₁= 1, coefficient y satisfies 0.4 ≤ y ≤ 1.2 (preferably 0.6 ≤ y ≤ 1.1), and coefficient z satisfies 6 ≤ z ≤ 12, preferably 7 ≤ z ≤ 11. The name of aluminosilicate is feldspar, and the feldspar may be a natural substance or a synthetic product, and the synthetic product is industrially available with ease.

In case where the mixture contains the above-mentioned aluminosilicate, the elemental composition ratio of Al, Mg, Ti, Si, Na, K and Ca therein is preferably represented by the compositional formula (3), wherein coefficient x satisfies 0 < x≤ 1, coefficient a satisfies 0.4x ≤ a < 2x, coefficient b satisfies 0.05 ≤ b ≤ 0.4, and coefficient c, d, and e satisfy b/20 ≤ c + d + e ≤ b/6. More preferably, these coefficients satisfy 0.05 ≤ b ≤ 0.10, 0<c, 0<d, and 0<e; even more preferably, these coefficients satisfy 0<e<c, and 0<e<d.

The mixture can be obtained, for example, by mixing an alumina source, a magnesia source and a titania source. The mixing may be attained by dry process or by wet process.

In dry mixing, for example, an alumina source, a magnesia source and a titania source may be mixed, preferably with stirring and grinding along with grinding media in a grinding container for producing an aluminium magnesium titanate-alumina composite ceramic having a uniform composition. In case where a silica source is used, an alumina source, a magnesia source and a titania source may be stirred along with a silica source in a grinding container.

The grinding media include, for example, alumina beads, zirconia beads and the like having a diameter of from 1 mm to 100 mm, preferably from 5 mm to 50 mm. The amount of the grinding media to be used may be generally from 1 time by mass to 1000 times by mass as much as the total amount of the starting materials, or that is, the alumina source, the magnesia source, the titania source and optionally the silica source, preferably from 5 times by mass to 100 times by mass.

The grinding may be attained, for example, by vibrating and rotating the grinding container after the starting materials and the grinding media are put into the grinding container. By vibrating and rotating the grinding container, the starting material powders are stirred and mixed along with the grinding media and are thereby ground. For vibrating or rotating the grinding container, for example, usable is an ordinary grinding machine such as a vibration mill, a ball mill, a planetary mill, a pin mill such as a high-speed rotating grinder or the like. From the viewpoint of industrial operation, a vibration mill is preferably used. When the grinding container is vibrated, the amplitude is generally from 2 mm to 20 mm, preferably at most 12 mm. The grinding may be attained by continuous process or by batch process; from the viewpoint of industrial operation, continuous process is preferred.

The time taken for the grinding is generally from 1 minute to 6 hours, preferably from 1.5 minutes to 2 hours.

In grinding the starting materials by dry process, additives such as a grinding aid, a deflocculant and the like may be added thereto.

The grinding aid includes, for example, alcohols such as methanol, ethanol, propanol, etc.; glycols such as propylene glycol, polypropylene glycol, ethylene glycol, etc. ; amines such as triethanolamine, etc.; higher fatty acids such as palmitic acid, stearic acid, oleic acid, etc.; carbon materials such as carbon black, graphite, etc. One or more of these may be used either singly or as combined.

In case where the additives are used, the total amount thereof to be used may be generally from 0.1 parts by mass to 10 parts by mass relative to 100 parts by mass of the total amount of the starting materials to be used, or that is, the total amount of the titania source, the alumina source, the magnesia source and optionally the silica source to be used, preferably from 0.5 parts by mass to 5 parts by mass, more preferably from 0.75 parts by mass to 4 parts by mass.

By firing the mixture, the aluminium magnesium titanate-alumina composite ceramic of the invention can be obtained.

For the firing, the mixture may be fired while powdery, or may be fired after shaped. The powdery mixture may be shaped, for example, according to a pressing method or the like.

The firing temperature may be generally from 1300°C to 1600°C from the viewpoint of easy production of aluminium magnesium titanate and from the practicability, preferably from 1400°C to 1550°C. The heating rate up to the firing temperature may be generally from 10°C/hr to 500°C/hr.

The firing may be attained generally in air; but depending on the type and the blend ratio of the starting materials (the alumina source, the magnesia source, the titania source and optionally the silica source) to be used, the firing may be attained in an inert gas such as nitrogen gas, argon gas or the like, or may be attained in a reducing gas such as carbon monoxide gas, hydrogen gas or the like. During the firing, the water vapor pressure in the atmosphere may be reduced.

In general, the firing is attained using an ordinary firing furnace such as a tubular electric furnace, a boxy electric furnace, a tunnel furnace, a far-IR furnace, a microwave heating furnace, a shaft furnace, a reverberating furnace, a rotary furnace, a roller hearth furnace, etc. The firing may be attained by batch process or by continuous process, and may be attained in a static mode or a fluidized mode.

The time to be taken for the firing may be a time enough for production of aluminium magnesium titanate from the mixture, and may vary depending on the amount of the mixture used, the type of the firing furnace, the firing temperature, the firing atmosphere and others, but may be generally from 10 minutes to 24 hours.

An aluminium magnesium titanate-alumina composite ceramic may be obtained by firing the mixture; and when the mixture is shaped and then fired, a shaped body of the aluminium magnesium titanate-alumina composite can be obtained; and when the powdery mixture is fired, a powdery aluminium magnesium titanate-alumina composite can be obtained. The powdery aluminium magnesium titanate-aluznina composite ceramic obtained by firing may be shaped in an ordinary method, for example, according to a method of adding water or the like followed by shaping; and the shaped body after the shaping may be sintered to give a sintered body.

In the formulae (1) to (3), the value of coefficient x may be controlled by the amount of the magnesium source and the titanium source to be used and by the firing condition (pressure, temperature, etc.). The value of coefficient a may be controlled by the amount of the alumina source to be used and also the amount of the magnesium source and the titanium source to be used, and the amount of the silica source also serving as an alumina source to be optionally used. The value of coefficient b may be controlled by the amount of the silica source to be used; and when an aluminosilicate is used as the silica source, the values of coefficient c, d and e may be controlled by the composition and the amount of the aluminosilicate to be used.

### EXAMPLES

The invention is described in detail with reference to the following Examples; however, the invention should not be limited by these Examples.

### Example 1:

44.0 parts by mass of titanium oxide powder, 50.2 parts by mass of α-alumina powder, 1.7 parts by mass of magnesium oxide, and 4.1 parts by mass of powdery feldspar, as mentioned below, were put into a grinding container along with alumina balls (diameter 15 mm), and stirred and mixed by dry process in a ball mill for 6 hours to give a powdery mixture.

Titanium oxide powder: TiO₂, DuPont, "R-900".
α-alumina powder: Al₂O₃, Sumitomo Chemical, "AES-12" having NaO content of 0.08 % by mass and a CaO content of 0.02 % by mass.
Magnesium oxide: MgO, Tateho's "H-10" having a CaO content of 0.37 % by mass.
Powdery feldspar: Fukushima Feldspar having an elemental composition of formula (4) where c₁= 0.27, d₁ = 0.64, e₁= 0.09, y = 1.08 and z = 10.4.

3 g of the obtained powdery mixture was taken out, and shaped into a disc having a diameter of 20 mm and a thickness of about 3 mm by pressing in a mold, using a uniaxial pressing machine under a shaping pressure of 200 kgf/cm² [19.6 MPa], thereby giving a shaped mixture. The shaped mixture was fired by heating up to 1450°C at a heating rate of 300°C/hr, in air in a boxy electric furnace, followed by maintaining the temperature for 4 hours, thereby giving a shaped ceramic. The elemental composition of the shaped ceramic was represented by the compositional formula (3) where x = 0.08, a =0.07 and b = 0.08.

The shaped ceramic was ground and analyzed through powder X-ray spectrometry. The powder X-ray diffraction spectrum showed diffraction peaks indicating a crystal phase of aluminium magnesium titanate and a crystal phase of α-alumina, but did not show a peak indicating crystalline SiO₂.

The shaped ceramic was observed with a scanning electronic microscope [SEM] and an energy disperse X-ray fluorescence spectrometer (EDX) attached to the SEM, in which α-alumina particles having a particle size of from 0.5 µm to 5 µm and having a center particle size of 2 µm were distributed everywhere.

By using the mixture obtained in the above and in the same manner as above but changing the mold, a rectangular shaped mixture of 3 mm × 4 mm × 40 mm was obtained. Then the shaped mixture was processed into a shaped ceramic, and the three-point bending strength thereof was measured at room temperature using a three-point bending tester, and was 30 MPa.

By using the mixture obtained in the above and operating in the same manner as above but changing the mold, a rectangular shaped mixture of 4 mm x 4 mm x 12 mm was obtained, then processed into a shaped ceramic, and heated from room temperature up to 800°C at 600°C/hr using a thermomechanical analyzer [Shimadzu's "TA-50"]. From the inclination of the thermal expansion curve between 300 and 800°C, the coefficient of thermal expansion was calculated and was 1.9 × 10⁻⁶ K⁻¹.

### Comparative Example 1:

A mixture was obtained in the same manner as in Example 1, except that, the amount of titanium oxide powder to be used was 44.8 parts by mass, the amount of α-alumina powder to be used was 48.6 parts by mass, the amount of magnesium oxide to be used was 1. 7 parts by mass, and the amount of powdery feldspar to be used was 4.9 parts by mass, and processed into a shaped ceramic. The elemental composition of the shaped ceramic was represented by the compositional formula (3) where x = 0.08, a = 0.02 and b = 0.09.

The shaped ceramic was evaluated in the same manner as in Example 1, and the powder X-ray diffraction spectrum thereof showed peaks indicating a crystal phase of aluminium magnesium titanate and an α-alumina phase, but did not show a peak indicating crystalline SiO₂.

By using the mixture obtained in the above and using the same mold as in Example 1, a rectangular shaped mixture of 3 mm × 4 mm × 40 mm was produced in the same manner as in Example 1, then processed into a shaped ceramic, and the three-point bending strength thereof was measured and was 22 MPa.

By using the mixture obtained in the above and using the same mold as in Example 1, a rectangular shaped mixture of 4 mm × 4 mm × 12 mm was produced in the same manner as in Example 1, then processed into a shaped ceramic, and the coefficient of thermal expansion thereof was calculated and was 1.7 × 10⁻⁶ K⁻¹.

### Comparative Example 2:

A mixture was obtained in the same manner as in Example 1, except that, the amount of titanium oxide powder to be used was 41.4 parts by mass, the amount of α-alumina powder to be used was 52.8 parts by mass, the amount of magnesium oxide to be used was 1. 6 parts by mass, and the amount of powdery feldspar to be used was 4.2 parts by mass, and processed into a shaped ceramic. The elemental composition of the shaped ceramic was represented by the compositional formula (3) where x = 0.08, a = 0.19 and b = 0.09.

The shaped ceramic was evaluated in the same manner as in Example 1, and the powder X-ray diffraction spectrum thereof showed peaks indicating a crystal phase of aluminium magnesium titanate and an α-alumina phase, but did not show a peak indicating crystalline SiO₂.

By using the mixture obtained in the above and using the same mold as in Example 1, a rectangular shaped mixture of 4 mm × 4 mm × 12 mm was produced in the same manner as in Example 1, then processed into a shaped ceramic, and the coefficient of thermal expansion thereof was calculated and was 2.9 × 10⁻⁶ k⁻¹.

### INDUSTRIAL APPLICABILITY

The aluminium magnesium titanate-alumina composite ceramic of the invention is favorably used, for example, for tools for firing furnaces such as crucibles, setters, saggers, refractories, etc; filters and catalyst carriers for use for exhaust gas purification in internal combustion engines such as diesel engines, gasoline engines, etc.; filters for foods and drinks such as beer, etc.; ceramic filters, for example, filters for selective permeation of gaseous components to be generated during petroleum purification, such as carbon monoxide, carbon dioxide, or nitrogen, oxygen or the like; electronic components such as substrates, capacitors, etc.

## Claims

1. An aluminium magnesium titanate-alumina composite ceramic containing aluminium magnesium titanate and alumina, and
the elemental composition ratio of Al, Mg and Ti of the aluminium magnesium titanate-alumina composite ceramic is represented by a compositional formula (1):
Al₂₍₁₋ₓ₎MgₓTi₍₁₊ₓ₎O₅ + aAl₂O₃ (1),
wherein coefficient x satisfies 0 < x ≤ 1, and coefficient a satisfies 0.4x ≤ a < 2x.

2. The aluminium magnesium titanate-alumina composite ceramic according to claim 1, containing element Si, and
the elemental composition ratio of Al, Mg, Ti and Si of the aluminium magnesium titanate-alumina composite ceramic is represented by a compositional formula (2):
Al₂₍₁₋ₓ₎MgₓTi₍₁₊ₓ₎O₅ + aAl₂O₃ + bSiO₂ (2),
wherein coefficient x satisfies 0 < x ≤ 1, coefficient a satisfies 0.4x ≤ a < 2x, and coefficient b satisfies 0.05 ≤ b ≤ 0.4.

3. The aluminium magnesium titanate-alumina composite ceramic according to claim 2, containing element Na, K or Ca, and
the elemental composition ratio of Al, Mg, Ti, Si, Na, K and Ca of the aluminium magnesium titanate-alumina composite ceramic is represented by a compositional formula (3):
Al₂₍₁₋ₓ₎MgₓTi₍₁₊ₓ₎O₅ aAl₂O₃+ bSiO₂ + cNa₂O + dK₂O + eCaO (3),
wherein coefficient x satisfies 0 < x ≤ 1, coefficient a satisfies 0.4x ≤ a < 2x, coefficient b satisfies 0.05 ≤ b ≤ 0.4, and coefficient c, d, and e satisfy b/20 ≤ c + d+ e ≤ b/6.

4. The aluminium magnesium titanate-alumina composite ceramic according to claim 2 or 3, not showing a peak for crystalline SiO₂ in the powder X-ray diffraction spectrum.

5. The aluminium magnesium titanate-alumina composite ceramic according to any one of claims 1 to 4, wherein alumina is granular, having a mean particle size of from 0.5 µm to 5 µm.

6. A process for producing an aluminium magnesium titanate-alumina composite ceramic described in claim 1, comprising firing a mixture containing an alumina source, a magnesia source and a titania source, and
the elemental composition ratio of Al, Mg and Ti of the mixture is represented by the compositional formula (1), wherein coefficient x satisfies 0 < x ≤ 1, and coefficient a satisfies 0.4x ≤ a < 2x.

7. The production process according to claim 6, wherein the mixture contains a silica source, and
the elemental composition ratio of Al, Mg, Ti and Si of the mixture is represented by a compositional formula (2), wherein coefficient x satisfies 0 < x ≤ 1, coefficient a satisfies 0.4x ≤ a < 2x, and coefficient b satisfies 0.05 ≤ b ≤ 0.4.

8. The production process according to claim 6, wherein the mixture contains a aluminosilicate,
the elemental composition ratio of A1, Mg, Ti, Si, Na, K and Ca of the mixture is represented by a compositional formula (3), wherein coefficient x satisfies 0 < x ≤ 1, coefficient a satisfies 0.4x ≤ a < 2x, coefficient b satisfies 0.05 ≤ b ≤ 0.4, and coefficient c, d, and e satisfy b/20 ≤ c+d+e < b/6,
the aluminosilicate contains at least one element selected from Na, K and Ca, and contains Si and Al, and
the elemental composition of the aluminosilicate is represents by a compositional formula (4):
(c₁Na₂O,d₁K₂O, e₁CaO)·yAl₂O₃·zSiO₂ (4),
wherein coefficient c₁, d₁ and e₁ satisfy c₁+d₁+e₁ = 1, coefficient y satisfies 0.4 ≤ y ≤1.2, and coefficient z satisfies 6 ≤ z ≤ 12.

9. Admixture containing an alumina source, a magnesia source and a titania source, and
the elemental composition ratio of Al, Mg and Ti of the mixture is represented by a compositional formula (1):
Al₂₍₁₋ₓ₎MgₓTi₍₁₊ₓ₎O₅+ aAl₂O₃ (1),
wherein coefficient x satisfies 0 < x ≤ 1, and coefficient a satisfies 0.4x ≤ a < 2x.

10. The mixture according to claim 9, wherein the mixture contains a silica source, and
the elemental composition ratio of Al, Mg, Ti and Si of the mixture is represented by a compositional formula (2):
Al₂₍₁₋ₓ₎MgₓTi₍₁₊ₓ₎O₅ + aAl₂O₃ + bSiO₂ (2),
wherein coefficient x satisfies 0 < x ≤ 1, coefficient a satisfies 0.4x ≤ a < 2x, and coefficient b satisfies 0.05 ≤ b ≤ 0.4.

11. A mixture containing an aluminosilicate represented by a compositional formula (4),
the elemental composition ratio of Al, Mg, Ti, Si, Na, K and Ca of the mixture is represented by a compositional formula (3):
Al₂₍₁₋ₓ₎MgₓTi₍₁₊ₓ₎O₅ + aAl₂O₃ + bSiO₂ + cNa₂O + dK₂O + eCaO (3),
wherein coefficient x satisfies 0 < x ≤ 1, coefficient a satisfies 0.4x ≤ a < 2x, coefficient b satisfies 0.05 ≤ b≤ 0.4, and coefficient c, d, and e satisfy b/20 ≤ c + d + e ≤ b/6,
the aluminosilicate contains at least one element selected from Na, K and Ca, and contains Si and A1, and
the elemental composition of the aluminosilicate is represents by a compositional formula (4):
(c₁Na₂O,d₁K₂O,e₁CaO)·yAl₂O₃·zSiO₂ (4),
wherein coefficient c₁, d₁ and e₁ satisfy c₁+d₁+e₁= 1, coefficient y satisfies 0.4 ≤ y ≤ 1.2, and coefficient z satisfies 6 ≤ z ≤ 12.
